# EUROPEAN PATENT SPECIFICATION

(11) **EP 4 213 588 B1**
(45) Date of publication and mention of the grant of the patent: **30.09.2026**
(21) Application number: 22151363.3
(22) Date of filing: 13.01.2022
(51) Int. Cl.: H05B 3/06, B29C 65/34, H02G 15/18, H01R 13/66

(54) **ELECTRICAL CONNECTOR FOR A HEATING SYSTEM, HEATING SYSTEM, AND METHOD FOR INSTALLING A HEAT SHRINK COVER**
ELEKTRISCHER VERBINDER FÜR EIN HEIZSYSTEM, HEIZSYSTEM UND VERFAHREN ZUR INSTALLATION EINER WÄRMESCHRUMPFABDECKUNG
CONNECTEUR ÉLECTRIQUE POUR UN SYSTÈME DE CHAUFFAGE, SYSTÈME DE CHAUFFAGE, ET PROCÉDÉ D'INSTALLATION D'UNE ENVELOPPE THERMORÉTRACTABLE

(43) Date of publication of application: 19.07.2023
(73) Proprietor: Tyco Electronics Raychem GmbH, 85521 Ottobrunn (DE)
(72) Inventor: Simonsohn, Thilo, 85521 Ottobrunn (DE); Kehl, Ladislaus, 85521 Ottobrunn (DE); Schoepf, Thomas, 85521 Ottobrunn (DE)
(74) Representative: Grünecker Patent- und Rechtsanwälte PartG mbB

(56) References cited:
- EP-A1- 3 624 288
- US-A- 4 719 914
- US-A- 5 910 776
- US-A1- 2005 184 856
- US-A1- 2011 045 680
- US-A1- 2016 049 787
- US-A1- 2019 052 025

## Description

The present invention relates to an electrical connector for a heating system, to a corresponding heating system, and to a method for installing a heat shrink over around a component to be covered. In particular, the present invention is usable for installing medium voltage (MV) joint bodies for 12 to 42 kV single-core and three-core cables, but may also be advantageous for covering other components and be used in other voltage classes. In particular, the present invention may be employed for installing heat shrink joint bodies and rejacketing sleeves as well as in principle all kinds of heat shrink sleeves such as terminations and cover sleeves as well as molded products like sheds, breakouts, boots and caps. The present invention further relates to an installation kit and an installation system for installing a heat shrink cover torchlessly.

The majority of existing MV joints comprise heat shrink joint bodies together with mastics, stress control sleeves, or patches underneath. On the outside of the heat shrink bodies, conductive meshes are taped, and the shield wires or tape shields of the cables are connected from one end of the joint to the other. Finally, the entire connection area is usually covered by a heat shrink outer protection sleeve, the so-called rejacketing sleeve.

Heat shrink components in the sense of the present invention relate to articles that are made from material which shrinks from an expanded state into a shrunk state with a much smaller diameter by applying a sufficient amount of heat. Heat shrink components are widely spread as joint sleeves or other cable accessories.

The present invention utilizes a heat-recoverable article (an independently dimensionally heat-unstable article) as a heat shrink layer. In general, such an article is made of a material capable of having the property of elastic or plastic memory imparted thereto which is heated to a certain temperature and distorted e. g. under internal pressure to a configuration different from its normal configuration and then cooled while kept under pressure. If the article is made of a material which is partly crystalline, is at least partly cross-linked in the amorphous areas, and is distorted at a temperature at or above the crystalline melting point of the material, the article will have elastic memory. An article with elastic memory will not recover towards its original configuration until it is again heated at least to its crystalline melting temperature. If the article is made of a non-crystalline material, it is heated to a temperature at which the article can be distorted by pressure, and the distorted article then has the property of plastic memory. Examples of heat-recoverable materials are found in U.S. Pat. No. 2,027,962 and U.S. Pat. No. 3,086,242. Of course, the heat shrink layer can be fabricated from any suitable material, as this is known to a person skilled in the art. Moreover, also multilayer arrangements that additionally comprise elastic and/or electrically semi-conductive and conductive layers are encompassed by the present invention.

The heat shrink cover which is installed according to the present invention, is intended to be used with voltages above approximately 1 kV. In particular, the term high-voltage in the context of the present invention is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course, also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint.

The present invention is also applicable to the so-called "low-voltage", LV, range that relates to voltages below 1 kV. The principles of the present invention may further be applied to heat shrink products used for electronic applications, piping and construction applications and further more.

The expression "sleeve" according to the present invention is intended to signify straight tube shaped sleeves as well as differently shaped covers for branch joints, elbows, bends, breakouts, wrap-arounds, sheds, and the like. Moreover, the term "heat shrink sleeve" is intended to comprise such a product which has at least one heat shrink layer, so that the heat shrink sleeve is heat-recoverable. In other words, a heat shrink sleeve according to the present invention may be partly or completely formed from a heat-recoverable material.

In order to install heat shrink products for LV, MV, and HV applications, typically open flames, such as gas torches, are used. However, from the stand point of safety at work, the use of open flames is disadvantageous. Furthermore, it is desired to reduce the amount of energy needed for installing products. In some cases it is also desired to reduce the amount of heat generated during installation. Consequently, it is desirable to use other energy sources than open flames, preferably electrical energy. In particular, it is desirable that the joint body and the rejacketing sleeve can be installed torchlessly in one process without further interaction of a cable jointer.

For instance from EP 3 624 288 A1 such a heating system is known. Further, as mentioned in this document, it is known to provide the installation kit with an identification tag for identifying the type and structure of the heat shrink cover, so that an operator can read the information on the identification tag by means of an identification reader, for instance a bar code or QR code reader. The identification reader is connected to the control unit via a cable.

US 2005/184856 A1 discloses an apparatus and method for controlling user access to electrical receptacles and telephone and network communication receptacles.

US 5,910,776 discloses a method and apparatus for identifying, locating, and monitoring equipment or other objects wherein a radio frequency identification transponder (RFID) is housed on, around, or within a connector, such as an electrical plug used for powering electrical or electronic equipment.

US 2016/0049787 A1 discloses a power socket apparatus with short distance communication functions including a plurality of power sockets, a plurality of antenna modules, a plurality of short distance communication readers-writers, a microcontroller and a power supply circuit

US 2019/0052025 A1 discloses an electrical socket connector for pluggable connection to a complementary plug connector, comprising a casing, a connection terminal assembly mounted in the casing for connection to a complementary connection terminal assembly of the plug connector, and an electronic switch for secure connection between the socket and plug connectors.

US 2011/0045680 A1 discloses a plug system for surgical devices including a plurality of sockets into which connecting plugs of electrosurgical instruments can be inserted, and a switching matrix having a plurality of switches for connecting at least one of the sockets to at least two different outputs or inputs of an electrosurgery device.

However, a problem with bar code or QR identification tags is that the jointer may be reading the tags of neighbored joints, so that the control unit is using incorrect heating sequences, and the reading procedure is sometimes difficult to execute due to outdoor installation sites. The bar codes or QR identification tags can be lost or could be easily removed from the heat-shrink joint and re-used for other, supposedly identical joints, but slightly modified installation sequence (e.g. due to a change of the internal heater circuits). Furthermore, the information stored by bar code or QR identification tags cannot be altered or supplemented on-site during or after the installation process.

Consequently, there is still a need to improve existing heating systems for heat shrink covers and methods for installing a heat shrink cover onto a component to be covered, which alleviate or overcome the disadvantages of conventional installation methods and provide a significant reduction of installation time, manufacturing costs, and the complexity, and improve the way the product and installation data is being retrieved by the control unit.

This object is solved by the subject matter of the independent claims. Advantageous embodiments of the present invention are the subject matter of the dependent claims.

The present disclosure is based on the idea to provide an information storage unit with the electrical heating element(s). This storage unit may be located directly at the electrical connector connected to the electrical heating element(s) or at any other location on the product. There is an electrically conductive, in particular a wired connection between the information storage unit and the control unit. This allows the control unit to automatically detect the type of joint connected and to retrieve the correct installation procedure. Thus, faulty installation due to the use of wrong installation procedures (in particular, temperature profile) can be avoided.

Furthermore, the user guidance provided by the control unit is very much simplified by the automatic detection of the joint. The implementation of a keyboard, which may be required to key-in additional information, can be avoided. The unit would also recognize immediately, in case the heater system is disconnected again and would fall back into the initial state before the connection was established.

In particular, the present disclosure provides an electrical connector for a heating system, the electrical connector comprising a first connector element comprising a housing, which may advantageously be electrically insulating, and at least one pair of first power terminals for providing electrical power to a heating element of the heating system. A second connector element is provided, which is mateable with the first connector element. The second connector element the second connector element comprises a pair of mating second power terminals mateable to the pair of power terminals and may be adapted to be connected to a control unit. According to the present disclosure, the connector comprises an information storage unit for storing data useable for operating the heating system, and a communication interface for reading out the data stored in the information storage unit. The data may for instance represent information regarding the type and identification of the heating system and/or may indicate a time-power sequence which should be used for operating the heating system.

The use of such a connector at the power input line of the heating element(s) simplifies user-machine interactions and avoids accidental mismatch of products or false handling of the control unit including any connected cables. Further, any re-use of identification data and related data sets can be prevented.

According to the invention, the information storage unit is a non-volatile electronic storage unit that comprises at least one read-only memory (ROM). The ROM may for instance be a programmable read-only memory, PROM, an erasable programmable read-only memory, EPROM, and/or an electrically erasable programmable read-only memory, EEPROM. Generally, a PROM is a form of digital memory where the setting of each bit is locked by a fuse or antifuse, eFUSEs can also be used. It is one type of read-only memory (ROM). The data in them are permanent and cannot be changed. PROMs are used in digital electronic devices to store permanent data, usually low level programs such as firmware or microcode. The key difference from a standard ROM is that the data is written into a ROM during manufacture, while with a PROM the data is programmed into them after manufacture. Thus, ROMs tend to be used only for large production runs with well-verified data, while PROMs are used to allow companies to test on a subset of the devices in an order before burning data into all of them. PROMs are manufactured blank and, depending on the technology, can be programmed at wafer, final test, or in system. Blank PROM chips are programmed by plugging them into a device called a PROM programmer. In the context of the present disclosure, the PROM is programmed with the desired information when manufacturing the heating unit comprising one or more electrical heating elements. During the operational life, the information stored in the PROM is not changed again.

Further, erasable PROMs (EPROM) may be used for allowing a reprogramming to a limited extent.

In particular, if it is desired that the information storage unit is also used for storing further information during or after the installation process, e. g. for documentation purposes, the information storage unit may also comprise an EEPROM, also called E²PROM. An EEPROM (electrically erasable programmable read-only memory) is a user-modifiable read-only memory (ROM) that can be erased and reprogrammed (written to) repeatedly through the application of higher than normal electrical voltage. Unlike EPROM chips, EEPROMs do not need to be removed from the assembly position to be modified. However, an EEPROM chip has to be erased and reprogrammed in its entirety, not selectively. It also has a limited life - however, the number of times it can be reprogrammed is limited to tens or hundreds of thousands of times, which is more than enough for the present application.

The advantage of using an EEPROM over using a PROM lies in the fact that the control unit may also write installation specific details (e.g. installation date, installer ID, or the like) back into the memory for later use. This provides an additional benefit in case of failure analysis. In addition, it becomes easily possible to write data into the memory during the manufacturing processes.

Also according to the invention, the communication interface comprises at least one communication terminal for being electrically contacted by a mating connector. In particular, the one or more communication terminals may be arranged in a manner that the connection is established when the first connector element and the mating second connector element are plugged together for providing power to the one or more heating elements forming the heating unit of the heating system. This geometry has the additional advantage that via the communication path it can immediately be registered by the control unit if the electrical contact to the heating unit is lost.

Alternatively or additionally, the communication interface comprises a wireless communication interface. Such a wireless communication interface allows access to the stored information even in situations where the power terminals are not connected, e. g. prior to the installation for testing purposes or after the installation for documentation purposes and failure analysis. The wireless communication interface may be operable under any known technology, e. g. Bluetooth^{®} or the like.

Advantageously, the communication interface is adapted for a bidirectional communication of the information storage unit with the control unit. This ensures that the control unit may not only retrieve information from the information storage unit, such as the type of heating element(s) and/or the type and characteristics of a cover to be heat shrunk, which is already pre-assembled with the heating unit, but may also input further information into the information storage unit. As already mentioned, such further information may relate to the date of the installation and/or to the installer ID.

According to a further advantageous example of the present disclosure, the information storage unit comprises an RFID tag arranged at the housing of the first connector element, wherein the communication interface comprises an RFID reader arranged at the second connector element. This solution has the advantage that a robust, well-established, and low-cost technology is employed which furthermore does not need an ohmic contact for transmitting the information. As this is known in the art, RFID (Radio-Frequency Identification) designates a contactless data exchange between an RFID transponder and an RFID writer/reader device. The RFID writer/reader device builds up a magnetic or electromagnetic field for data transmission purposes, which supplies the RFID transponder with energy. As long as the RFID transponder remains within the electromagnetic field of the RFID writer/reader device, data can be exchanged. Information can be read out from the chip in the RFID transponder, but also new data can be stored on the chip.

By locating the RFID writer/reader device inside the mating second connector, a separation of the plug connection may also be detected.

Exemplarily, the storage unit may comprise a printed circuit board mounted inside the housing with an electronic information storage unit assembled on the printed circuit board. For instance, the housing may have two sections which are electrically insulated from each other. In a first section, the one or more pairs of power terminals are held, and in a second section, the printed circuit board with the information storage unit is arranged.

According to a further advantageous example of the present disclosure, the first connector element is further adapted to receive a temperature measurement signal from one or more external temperature sensors. The temperature sensor(s) may for instance be attached to the heat shrink cover in order to monitor the actually achieved temperature values.

The present disclosure further relates to a corresponding heating system for a heat shrink component, the heating system comprising
at least one heating element;
at least one electrical connector according to the present disclosure, wherein the heating element is connected to the at least one pair of first power terminals.

The heating system may further comprise a control unit for controlling the power supply to the at least one heating element, wherein the control unit is operable to bidirectionally communicate with the electronic storage unit.

In order to be independent of energy sources such as a mains power supply, the heating may further comprise its own power generator and/or a battery pack forming said power source. The power source may be connected to the electrical connector attached to the heating unit either directly or via a separate control unit.

In this case, the at least one of the power generator and/or battery pack further comprise an electrical connector as described above for allowing a bidirectional communication with the control unit. Thus, the control unit may identify the type and characteristics of the connected power source and may adapt the control scheme for powering the heating unit to the particular power source.

Finally, the present disclosure also relates to a method for installing a heat shrink cover, the method comprising the following steps:
providing the heat shrink cover with at least one heating element, wherein the heating element is electrically connected to a first connector element of an electrical connector according to the present disclosure,
connecting a power source to the at least one heating element by connecting the mating second connector element to the first connector element;
via the communication interface, reading out the data stored in the information storage unit;
supplying electrical power to the at least one heating element for performing a heating process according to the data stored in the information storage unit.

For instance, the power source is connected by connecting a control unit to the at least one heating element. Further, by means of the control unit, information indicative of a required heating profile from the storage unit is read out from the information storage unit. Accordingly, electrical power is supplied to the at least one heating element for performing a heating process according to the required heating profile.

In this manner, a particularly safe and efficient torchless installation of heat shrink covers can be achieved.

Furthermore, if the information storage unit comprises an electronic storage unit, the method may further comprise the step of storing information inputted by the control unit in the electronic storage unit during or after the heating process has been completed. As mentioned above, this information may be helpful for documentation purposes and in case of a failure analysis.

Advantageously, the control unit communicates with further electrical connectors, the first connector elements of which are connected to further electric components. For instance, the type and/or presence of a battery and/or a power generator may be detected by the control unit.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic perspective view, partly exploded, of an electrical connector according to a first example;
- **FIG. 2**: is a further view of the electrical connector of Fig. 1;
- **FIG. 3**: is a schematic illustration of an example of a heating system for heat shrinking heat recoverable articles;
- **FIG. 4**: is a schematic perspective view of an electrical connector according to a second example;
- **FIG. 5**: a further view of the electrical connector of Fig. 4;
- **FIG. 6**: a perspective view of a part of the electrical connector of Fig. 4;
- **FIG. 7**: a further perspective view of another part of the electrical connector of Fig. 4.

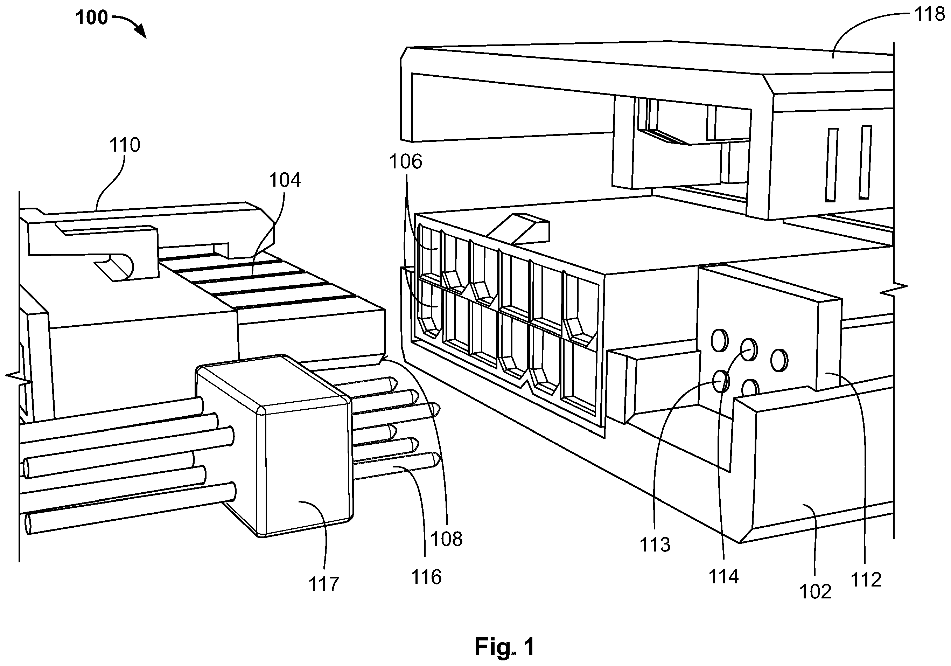

The present invention will now be explained in more detail with reference to the Figures and firstly referring to Fig. 1.

To avoid open flames during the installation process of medium voltage heat-shrink joints and to improve reliability of the installation process, a heat shrink joint family has been developed, where each heat shrink joint (also referred to as heat shrink cover) is equipped with an electrical heater unit. The heater unit comprises one or more heater circuits (also referred to as heating elements), which need to be energized with changing power levels and in a specific sequence to generate a heat-wave starting in the center of the joint, which is like the heat-wave achieved by the manual shrinking process with a torch. The installation process is beneficially carried out by means of an electrical control unit, which can install up to three joints simultaneously.

Due to the different sizes of the joints, the design of the heater circuits as well as the heating sequences vary. In order to cope with this situation, with previous heating systems, the operator must manually enter the heater sequences into the controller and to keep the control unit universal (i.e. not needing to store all different heater sequences within the control unit) it is beneficial, if the sequence and all other relevant information, like batch number, manufacturing date, etc. is provided to the control unit in an automated way.

For the installation of the earlier described heat shrink joint, a control unit (either battery powered or connected to mains or an AC generator) is connected to the heater unit of the joint. A heater unit can for instance include up to 12 individual heater circuits, also referred to as heating elements in the following. In case that no common return contact is used, a total of 24 individual contacts will be required to operate the heating elements.

For connecting the power terminals of the heating unit to the control unit, a plug connector is provided. Fig. 1 illustrates an electrical connector 100 according to an example of the present disclosure. The connector 100 comprises a first connector element 102 and a mating second connector element 104. The first and second connector elements 102, 104 are plugged together during the heating process for supplying electrical energy to the heating elements of the heating unit. It should be noted that the electrical leads which are attached to the heating unit are not shown in the Figure for the sake of clarity.

In the shown example, the first connector element 102 has six pairs of power terminal sockets 106 which are connected to the heating unit, wherein one pair of the power terminal sockets 106 is connected to one heating element. It should be noted that of course also any other suitable number of power terminals can be used with the present disclosure. Moreover, instead of socket terminals, also pin contacts can be provided at the first connector element 102.

In the shown example, the mating second connector element 104 is provided with pairs of power terminal pins 108 which can be plugged into the sockets 106 for establishing an electrical connection. The power terminal pins 108 are connected preferably via a conductive lead to the control unit. In the connected state, releasable locking means, e. g. a releasable latch hook 110 secures the first and second connector elements 102, 104 at each other.

An information storage unit 112, comprising e. g. a PROM, EPROM or EEPROM, is beneficially located within the receiving first connector 102 of the heater unit, automatically providing all the stored information to the control unit, when the connection is made. Depending on the type of PROM interface, a minimum of 1 (1-wire), 2 (I²C), or 3 (SPI) additional contacts will be required to read-out the data.

In other words, the number of electrical contacts depends on the interface technology of the information storage unit. In any case, two contacts are provided for the power supply, one additional contact is provided if a 1-wire connection is used, alternatively or additionally, two contacts are provided for a communication according to the I²C (Inter-integrated circuit) protocol, namely SCL and SDA. With I²C, multiple slaves can be connected to one master, or multiple masters can control a single or multiple slaves. The I²C protocol uses only two wires to transmit data between devices: The bidirectional serial data (SDA) line and the serial clock (SCL) line which carries the clock signal for synchronizing the output of bits the sampling of bits. The clock signal is always controlled by the master.

In case the communication is performed using the Serial Peripheral Interface (SPI) protocol, three or four additional contacts are needed, namely for MISO, MOSI, SCLK, and optionally SS. SPI is a common communication protocol used by many different devices. For example, SD card reader modules, RFID card reader modules, and 2.4 GHz wireless transmitter/receivers all use SPI to communicate with microcontrollers.

One unique benefit of SPI is the fact that data can be transferred without interruption. Any number of bits can be sent or received in a continuous stream. With I²C, data is sent in packets, limited to a specific number of bits. Start and stop conditions define the beginning and end of each packet, so the data is interrupted during transmission.

Devices communicating via SPI are in a master-slave relationship. The master is the controlling device (usually a microcontroller), while the slave (usually a sensor, display, or memory chip) takes instruction from the master. The simplest configuration of SPI is a single master, single slave system, but one master can control more than one slave. Four lines are usually used, namely MOSI (Master Output/Slave Input), the line for the master to send data to the slave; MISO (Master Input/Slave Output), the line for the slave to send data to the master; SCLK (Clock), the line for the clock signal; SS/CS (Slave Select/Chip Select), the line for the master to select which slave to send data to.

However, it should be noted that the idea of the present invention is not restricted to a particular communication protocol - any suitable protocol may advantageously be used.

An electrically insulating housing 118 encompasses the power terminals 106 and the information storage unit 112.

As can be seen from Fig. 1, the information storage unit 112 has a communication terminal 113 with a plurality of first contact elements 114 which are socket-shaped and can be electrically contacted by a mating plurality of second contact elements 116 arranged at a mating plug connector 117, when the connector 100 is plugged together. The second contact elements 116 are pin-shaped. Of course, the arrangement can also be vice versa, i. e. with the pins arranged at the first connector element 102 and the sockets arranged at the second connector element 104. Further, as mentioned above, the number of contact elements depends on the chosen communication protocol of the information storage unit 112.

Furthermore, the ohmic contacts 114, 116 may also be completely dispensed with, if the information storage unit 112 is provided with a wireless communication interface, for instance a Bluetooth^{®} communication interface. However, the ohmic contacts have the advantage that such a wired connection is robust, cost efficient, and hassle-free.

The second contact elements 116 are connected via electrical leads to the control unit. According to the present disclosure, a bidirectional communication can be performed via these contact elements, 114, 116, so that data may be retrieved from the information storage unit 112 and, furthermore, data may also be inputted and stored in the information storage unit 112. By automatically detecting the type of joint connected and transferring the correct installation procedure to the control unit, faulty installations due to wrong installation procedures can be completely avoided.

Additionally, the user guidance provided by the control unit is very much simplified by the automatic detection of the joint. For instance, the implementation of a keyboard, which may be required to key-in additional information, can be avoided. The control unit would also recognize immediately when the heater unit is disconnected again and would fall back into the initial state before the connection was done.

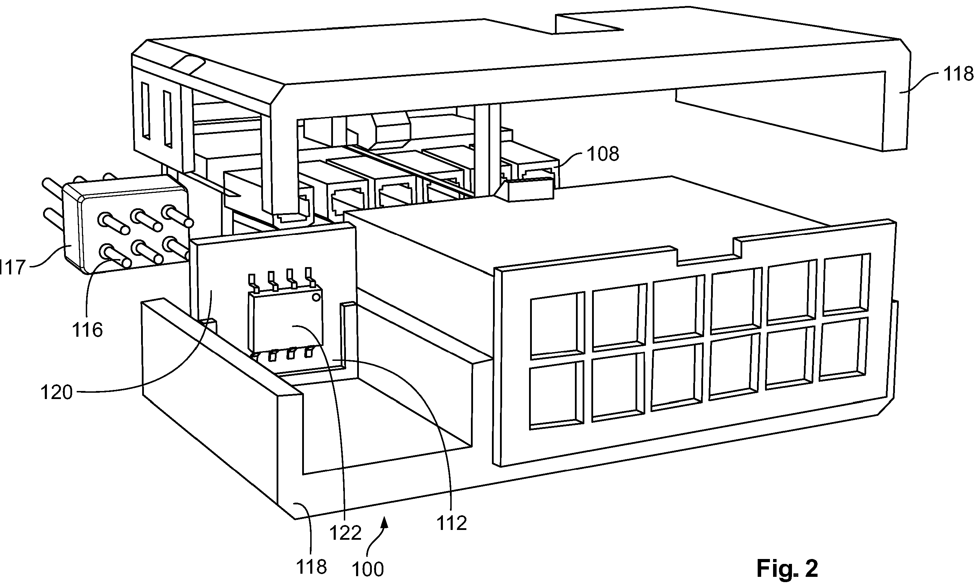

Fig. 2 shows the electrical connector 100 in a rotated view. As can be seen from this Figure, the information storage unit 112 comprises a circuit carrier, e. g. a printed circuit board (PCB) 120. As an electronic storage unit, a memory module 122 is assembled on the PCB 120.

Of course, also a ceramic substrate or a flexible circuit board can be used instead of the PCB 120. Also three-dimensional carrier structures generated by MID technology, so-called Three-Dimensional Molded Interconnect Devices (*3D-MID*), e. g. the inside of the housing 118, can be used as a substrate for mounting the memory module 122.

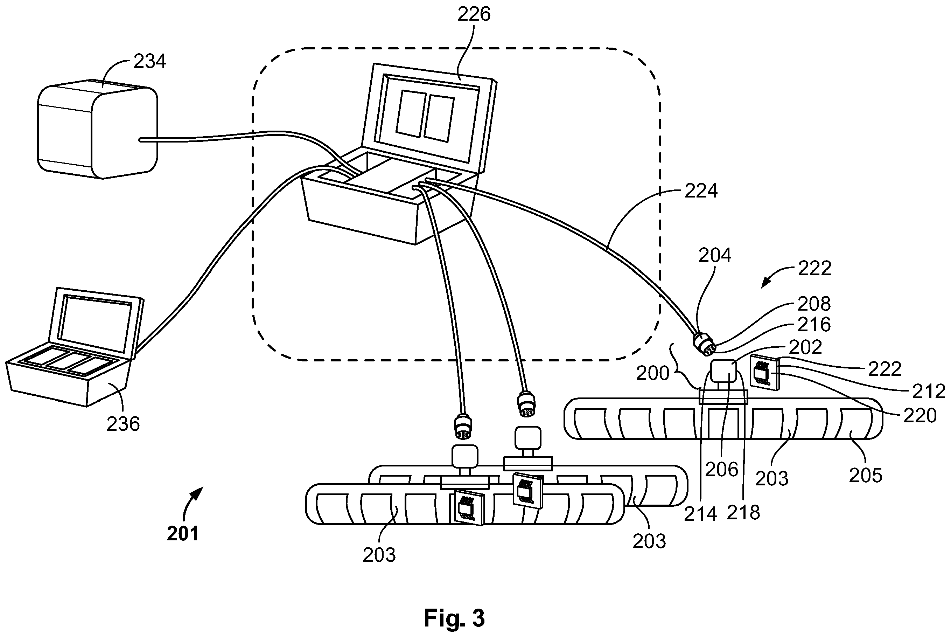

Fig. 3 illustrates schematically a heating system 201 using electrical plug connectors 200 according to a further example. It should be noted that instead of the electrical plug connector 200 also the electrical plug connector 100 of the previous Figures can be used.

The heating system 200 comprises one or more heating units 203, each comprising one or more heating elements 205. These heating units 203 may also be pre-assembled on the heatshrink cover to be shrunk (i. e. installed).

The electrical connection for powering the heating elements 205 is provided by electrical connector 200. In the shown example, this is a circular connector with spring loaded pins at the second connector element, so-called "pogo pins". They are used for their improved durability over other electrical contacts, and the resilience of their electrical connection to mechanical shock and vibration. Essentially, these pins are the same type of spring loaded contacts as those used for connecting the memory, but with a much higher current rating.

The second connector element 204 also may have an information storage unit because the joint's structure and installation sequence may change during the life cycle of the final product. It cannot be ensured that jointers always pick products from their stock with identical batch numbers for installation. Secondly, joints may not always be sold as kits of three and in case of a replacement of a single product, it needs to be made sure that all details are provided to successfully install the product. Finally, the memory chip also includes the product's serial number and other unique information. Therefore, each product requires its own memory chip.

A first connector element 202 is connected to the heating unit 203 for providing power to each of the heating elements 205. According to the present disclosure, the first connector element 202 is provided with an information storage unit 212 similar to the information storage unit described with reference to Fig. 1 and 2. It should be noted that Fig. 3 is only a schematic illustration, the information storage unit 212 is of course integrated inside the housing 218 of the first connector element 202.

The second connector element 204 is connected via an electrical lead 224 to a control unit 226. The control unit 226 outputs electrical power to the heating unit(s) 203. The power is controlled by means of pulse width modulation (PWM). On the output side, the control unit 226 may have a plurality of output ports 228. In the drawing of Fig. 3 there are shown three output ports 228. However, it is clear that also less or more output ports 228 can be provided. Connectors with information storage units may also be used for the connectors 230 attached to the electrical output leads 224 so that a correct connection of such a lead 224 can be monitored.

On the input side, the control unit 226 has at least one input port 232. To the input port 232, either a power generator 234 or a battery pack 234 may be connected via an electrical input lead 240. Also a connection to mains power may be established via the mains plug 238. As schematically illustrated, each connector in the heating system 201 may be provided with information storage unit 212 according to the present disclosure in order to identify the respectively connected components. For instance, information from and to the battery management system (BMS) of the battery pack 236 can be stored in an information storage unit arranged in a connector attached to the battery pack 236.

The identification of further components required by the control unit 226 can be performed in line with the principles of the present disclosure. PROMs may be added into all connectors of connected cables (AC power, battery cables) as well as batteries and intermediate plugs, etc. for identification purposes but also for keeping track of the number of uses, in case there are wearing parts with a maximum number of using cycles. Again, the use of EEPROMs over PROMs is preferred, since the control unit could then also write installation specific details (e.g. installation date, installer ID, or the like) back into the memory for later use. This could provide an additional benefit in case of failure analysis.

Although not shown in the Figures, RFID tags could also be used beneficially as the information storage unit 112 to achieve a similar functionality. However, there are further aspects to be considered: The RFID tag's information may need to be assigned manually to a specific output of the control unit. A mismatch cannot be detected by the control unit in all cases. To some extent, plausibility checks can be used to identify improper assignment of data. RFID tags could be easily removed from the heat-shrink joint and re-used for other, supposedly identical joints, but slightly modified installation sequence (e.g. due to a change of the internal heater circuits). Disconnecting/reconnecting joints may not be detectable by the control unit.

However, these disadvantages can be avoided by placing RFID readers directly into the second connector element of each connector with the corresponding RFID tag being placed hidden in the mating first connector element.

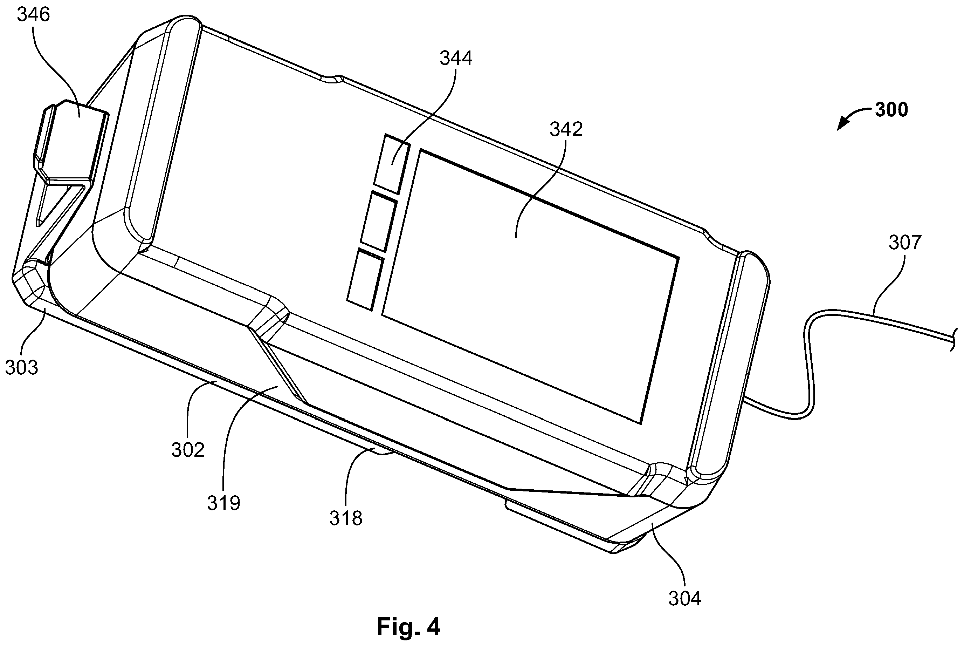

In the following, a further advantageous example of an electrical connector 300 will be explained in detail with reference to Fig. 4 to 7. In this example, the first connector element 302 comprises a base plate 303, forming a housing 318, which can be attached to a heating system (not shown in the drawings). For instance, the heating system is positioned around a heat shrink product to be installed. After the installation process, the first connector element 302 advantageously remains in place, so that the documentation of the installation process remains on site.

The second connector element 304 comprises a housing 319 which in an integrated form contains a control unit which is able to read out information from an information storage unit 312 arranged on the first connector element 302. The control unit is further operable to control the installation process and to provide the heating power required according to the information read from the information storage unit 312 to the heating system.

For this purpose, the second connector element 304 comprises a microcontroller and switching circuitry which allow to feed power to the heating system according to a defined timing sequence and with a defined voltage and/or current value. The second connector element 304 draws electric power from a battery or other power source, e. g. a mains power source, via an electric lead 307.

An operator can monitor the heating process via a display device 342, for instance a liquid crystal display (LCD). Furthermore, keys 344 are provided so that an operator is able to interfere with the heating process and/or to input information to be stored in the information storage unit 312 arranged at the heating system. Instead of separate keys 344, the display device may also be directly touch sensitive and thus may function as an input device.

For securing the second connector element 304 at the first connector element 302, locking means 310 for instance in the form of a snap hook 346, a hinge hook 347, and two magnets 348 interacting with respective steel plates 350 are provided. However, only one locking means 310 and also different concepts of releasable fixing means (e. g. screws or different snap fit mechanisms) may be provided according to the present disclosure.

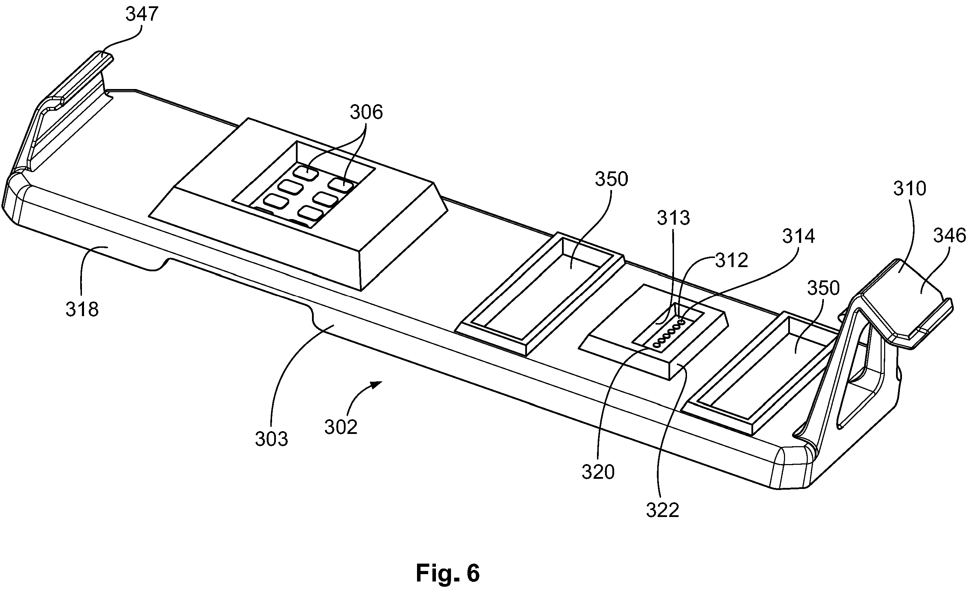

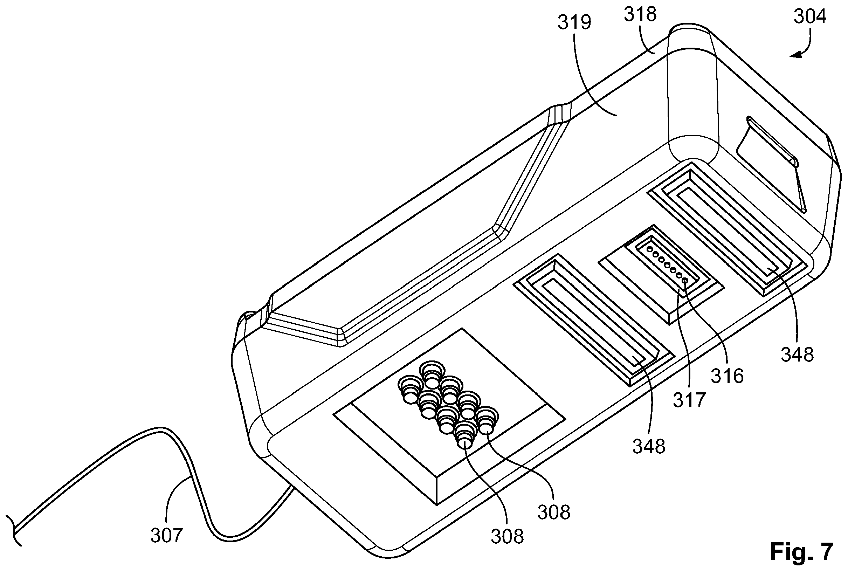

Instead of using a plug connector, the power connection is effected via an abutting contact employing contact pads and compressible spring biased contacts. In particular, as can be seen from Fig. 6, the first connector element 302 comprises an array of contact pads forming the first power terminals 306. As can be seen from Fig. 7, the mating second power terminals 308 comprise compressible, spring biased terminals. The second power terminals 308 are compressed in the state where the second connector element 304 is fixed at the first connector element 302, so that due to the outwardly pressing spring force of each power terminal 308 a safe electrical contact is established and maintained throughout the installation process. This is important for conducting the relatively high currents that are uses during the heating process.

According to the present disclosure, the first connector element 302 is provided with an information storage unit 312. The information storage unit 312 is electrically contacted via a row of first contact elements 314 which are part of a communication terminal 313. The information storage unit 312, comprising e. g. a PROM, EPROM or EEPROM, is beneficially located within the receiving first connector 302, the first connector 302 being connectable to the heating unit 203. The information storage unit 312 is operable to automatically provide all the stored information to the control unit, when the connection is made. Depending on the type of PROM interface, a minimum of 1 (1-wire), 2 (I²C), or 3 (SPI) additional contacts will be required to read-out the data.

Mating second contact elements 316 are arranged at the second connector element 304. It should be noted that these second contact elements 316 are depicted only schematically and not to scale. The second contact elements 316 are part of a mating connector 317 for contacting the communication terminal 314. The abutting electrical contact is established by the normal force generated by the magnets 348 on the steel plates 350, and the locking means 310, when attaching the second connector element 304 at the first connector element 302. Of course, also a plug connection or a sliding spring contact may be used at the communication terminal 313. Further, the second contact elements 316 may also comprise compressible, spring biased terminals as described above for the second power terminals 308. These terminals are compressed in the state where the second connector element 304 is fixed at the first connector element 302, so that due to the outwardly pressing spring force of each second contact element 316 a safe electrical contact is established and maintained throughout the installation process.

The information storage unit 312 is similar to the information storage unit described with reference to Fig. 1 and 2 and provides the same advantages. In particular, the information storage unit 312 comprises a memory module 322 mounted on a circuit carrier 320. In addition to the examples previously described, the second connector element 304 integrally accommodates inside its housing 319 a control unit, so that only an external power source (e. g. a battery pack or a mains power supply) is needed for installing a heat shrink component to which the heating system with the first connector element 302 is attached. However, also further control units may be connected to the second connector element 304. In this case, the controller inside the second connector element 304 is operated as a slave. In particular, for applications where the heating unit 203 comprises a plurality of heating elements 205, further at least widely identical control units may be connected to the heating unit 203 preferably using multiple, at least widely identical first connector elements 302.

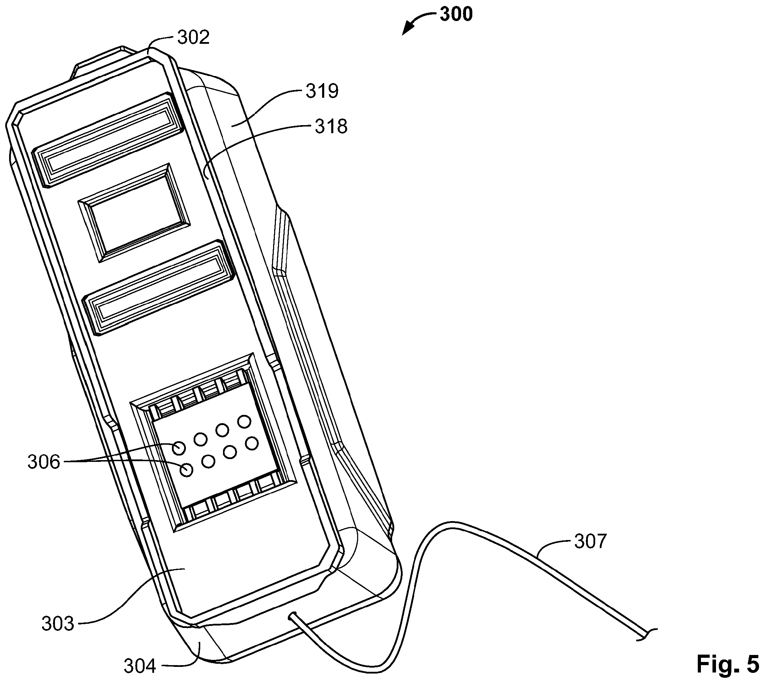

As can be seen from Fig. 5, the surface of the base plate 303, which is opposed the second connector element 304, is connectable to a heating system in a manner that the first power terminals 306 are connected to the heating elements of the heating unit. Thus, under the control of the control unit embedded in the second connector element 304, the heating elements are provided with electrical power. The heat shrink component attached to the heating elements is heated up according to a defined temperature and timing schedule based on the information read from the information storage unit 312.

It should be noted that, although in the previous description only a power transmission via ohmic contacts has been mentioned, a wireless power transmission can also be used with the connector according to the present disclosure. For instance, an inductive contactless coupling can be provided for the power transmission. The inductive coupling has the advantage of being robust and completely sealed against intrusion of humidity and dust.

**REFERENCE NUMERALS**

| **Reference Numeral** | **Description** |
|---|---|
| 100 | electrical connector |
| 102 | first connector element |
| 104 | (mating) second connector element |
| 106 | pairs of power terminal sockets; first power terminals |
| 108 | pairs of power terminal pins; second power terminals |
| 110 | locking means |
| 112 | information storage unit |
| 113 | communication terminal |
| 114 | first contact elements |
| 116 | second contact elements |
| 117 | mating connector for contacting communication terminal |
| 118 | housing |
| 120 | circuit carrier, PCB |
| 122 | memory module |
| 200 | electrical connector |
| 201 | heating system |
| 202 | first connector element |
| 203 | heating unit |
| 204 | (mating) second connector element |
| 205 | heating element; heater circuit |
| 206 | power terminal sockets |
| 208 | power terminal pins |
| 210 | locking means |
| 212 | information storage unit |
| 214 | first contact elements |
| 216 | second contact elements |
| 218 | housing |
| 220 | circuit carrier, PCB |
| 222 | memory module |
| 224 | electrical output lead |
| 226 | control unit |
| 228 | output port |
| 230 | connector at electrical lead |
| 232 | input port |
| 234 | power generator |
| 236 | battery pack |
| 238 | mains plug |
| 240 | electrical input lead |
| 300 | electrical connector |
| 302 | first connector element |
| 303 | base plate |
| 304 | (mating) second connector element |
| 306 | pairs of first power terminals |
| 307 | electrical lead |
| 308 | pairs of second power terminals |
| 310 | locking means |
| 312 | information storage unit |
| 313 | communication terminal |
| 314 | first contact elements |
| 316 | second contact elements |
| 317 | mating connector for contacting communication terminal |
| 318 | housing of first connector element |
| 319 | housing of second connector element |
| 320 | circuit carrier, PCB |
| 322 | memory module |
| 342 | display device |
| 344 | key |
| 346 | snap hook |
| 347 | hinge hook |
| 348 | magnet |
| 350 | steel plate |

## Claims

1. Electrical connector for a heating system (201), the electrical connector (100, 200, 300) comprising:
a first connector element (102, 202, 302) comprising a housing (118, 218, 318) and at least one first power terminal (106, 206, 306) for providing electrical power to a heating element (205) of the heating system (201);
a second connector element (104, 204, 304) mateable with the first connector element (102, 202, 302), the second connector element (104, 204, 304) comprising a mating second power terminal (108, 208, 308) mateable with the at least one first power terminal (106, 206, 306);
an information storage unit (112, 212, 312) for storing data useable for operating the heating system (201); and
a communication interface for reading out the data stored in the information storage unit (112, 212, 312),
wherein the communication interface comprises at least one communication terminal (113, 313) having first contact elements (114, 314) for being connected to second contact elements (116, 316) of a mating electrically conductive connector (117, 317); and
the information storage unit (112, 212, 312) is an electronic storage unit that comprises at least one programmable read-only memory, PROM, erasable programmable read-only memory, EPROM, and/or electrically erasable programmable read-only memory, EEPROM.

2. Electrical connector according to one of the preceding claims, wherein the communication interface comprises a wireless communication interface.

3. Electrical connector according to one of the preceding claims, wherein the communication interface is adapted for a bidirectional communication of the information storage unit (112, 212, 312) with the control unit (226).

4. Electrical connector according to one of the preceding claims, wherein the information storage unit (112, 212, 312) comprises an RFID tag arranged at the housing (118, 218, 318) of the first connector element (102, 202, 302), and wherein the communication interface comprises an RFID reader arranged at the second connector element (104, 204, 304).

5. Electrical connector according to one of the preceding claims, wherein the information storage unit (112, 212, 312) comprises a printed circuit board (120, 220, 320) mounted inside the housing (118, 218, 318) with an electronic storage unit (122, 222, 322) assembled on the printed circuit board (120, 220, 320).

6. Electrical connector according to one of the preceding claims, wherein the first connector element (102, 202, 302) is further adapted to receive a temperature measurement signal from an external temperature sensor.

7. Heating system for a heat shrink component, the heating system (201) comprising
at least one heating unit (203) with at least one heating element (205);
at least one electrical connector (100, 200, 300) according to one of the preceding claims, wherein the at least one heating element (205) is connected to the at least one first power terminal (106, 206, 306).

8. Heating system according to claim 7, further comprising a control unit (226) for controlling the power supply to the at least one heating element (205), wherein the control unit (226) is operable to communicate with the information storage unit (112, 212, 312) via the communication interface (113, 313).

9. Heating system according to claim 7 or 8, further comprising a power generator (234) and/or a battery pack (236) forming said power source.

10. Heating system according to claim 9, wherein at least one of the power generator (234) and/or battery pack (236) further comprises an electrical connector (100, 200, 300) according to one of the claims 1 to 6 for allowing a bidirectional communication with the control unit (226).

11. Method for installing a heat shrink cover, the method comprising the following steps:
providing the heat shrink cover with at least one heating element (205), wherein the heating element (205) is electrically connected to a first connector element (102, 202, 302) of an electrical connector (100, 200, 300) according to one of the claims 1 to 6,
connecting a power source (226) to the at least one heating element (205) by connecting the mating second connector element (104, 204, 304) to the first connector element (102, 202, 302);
via the communication interface, reading out the data stored in the information storage unit (112, 212, 312);
supplying electrical power to the at least one heating element (205) for performing a heating process according to the data stored in the information storage unit (112, 212, 312).

12. Method according to claim 11, wherein the information storage unit (112, 212, 312) comprises an electronic storage unit (122, 222, 322), the method further comprising the step of storing information inputted by the control unit (226) in the electronic storage unit (122, 222, 322) after the heating process has been completed.

13. Method according to claim 11 or 12, wherein the control unit (226) communicates with further electrical connectors (100, 200, 300), the first connector elements (102, 202, 302) of which are connected to further electric components.

## Patentansprüche

1. Elektrischer Verbinder für ein Heizsystem (201), wobei der elektrische Verbinder (100, 200, 300) umfasst:
ein erstes Verbindungselement (102, 202, 302), umfassend ein Gehäuse (118, 218, 318) und mindestens einen ersten Leistungsanschluss (106, 206, 306) zum Zuführen elektrischer Energie zu einem Heizelement (205) des Heizsystems (201);
ein zweites Verbindungselement (104, 204, 304), das mit dem ersten Verbindungselement (102, 202, 302) verbindbar ist, wobei das zweite Verbindungselement (104, 204, 304) einen zugehörigen zweiten Leistungsanschluss (108, 208, 308) umfasst, der mit dem mindestens einen ersten Leistungsanschluss (106, 206, 306) verbindbar ist;
eine Informationsspeichereinheit (112, 212, 312) zum Speichern von Daten, die zum Betreiben des Heizsystems (201) verwendbar sind; und
eine Kommunikationsschnittstelle zum Auslesen der in der Informationsspeichereinheit (112, 212, 312) gespeicherten Daten,
wobei die Kommunikationsschnittstelle mindestens einen Kommunikationsanschluss (113, 313) mit ersten Kontaktelementen (114, 314) zum Verbinden mit zweiten Kontaktelementen (116, 316) eines zugehörigen elektrisch leitfähigen Verbinders (117, 317) umfasst; und
die Informationsspeichereinheit (112, 212, 312) eine elektronische Speichereinheit ist, die mindestens einen programmierbaren Nur-Lese-Speicher, PROM, löschbaren programmierbaren Nur-Lese-Speicher, EPROM, und/oder elektrisch löschbaren programmierbaren Nur-Lese-Speicher, EEPROM, umfasst.

2. Elektrischer Verbinder nach einem der vorhergehenden Ansprüche, wobei die Kommunikationsschnittstelle eine drahtlose Kommunikationsschnittstelle umfasst.

3. Elektrischer Verbinder nach einem der vorhergehenden Ansprüche, wobei die Kommunikationsschnittstelle für eine bidirektionale Kommunikation der Informationsspeichereinheit (112, 212, 312) mit der Steuereinheit (226) ausgelegt ist.

4. Elektrischer Verbinder nach einem der vorhergehenden Ansprüche, wobei die Informationsspeichereinheit (112, 212, 312) ein RFID-Tag umfasst, das an dem Gehäuse (118, 218, 318) des ersten Verbindungselements (102, 202, 302) angeordnet ist, und wobei die Kommunikationsschnittstelle ein RFID-Lesegerät umfasst, das an dem zweiten Verbindungselement (104, 204, 304) angeordnet ist.

5. Elektrischer Verbinder nach einem der vorhergehenden Ansprüche, wobei die Informationsspeichereinheit (112, 212, 312) eine im Gehäuse (118, 218, 318) angeordnete Leiterplatte (120, 220, 320) mit einer auf der Leiterplatte (120, 220, 320) montierten elektronischen Speichereinheit (122, 222, 322) umfasst.

6. Elektrischer Verbinder nach einem der vorhergehenden Ansprüche, wobei das erste Verbindungselement (102, 202, 302) ferner dazu ausgelegt ist, ein Temperaturmesssignal von einem externen Temperatursensor zu empfangen.

7. Heizsystem für eine Wärmeschrumpfkomponente, wobei das Heizsystem (201) umfasst:
mindestens eine Heizeinheit (203) mit mindestens einem Heizelement (205);
mindestens einen elektrischen Verbinder (100, 200, 300) nach einem der vorhergehenden Ansprüche, wobei das mindestens eine Heizelement (205) mit dem mindestens einen ersten Leistungsanschluss (106, 206, 306) verbunden ist.

8. Heizsystem nach Anspruch 7, ferner umfassend eine Steuereinheit (226) zum Steuern der Stromversorgung des mindestens einen Heizelements (205), wobei die Steuereinheit (226) dazu eingerichtet ist, über die Kommunikationsschnittstelle (113, 313) mit der Informationsspeichereinheit (112, 212, 312) zu kommunizieren.

9. Heizsystem nach Anspruch 7 oder 8, ferner umfassend einen Stromgenerator (234) und/oder ein Batteriepack (236), die die genannte Stromquelle bilden.

10. Heizsystem nach Anspruch 9, wobei mindestens eines von dem Stromgenerator (234) und/oder dem Batteriepack (236) ferner einen elektrischen Verbinder (100, 200, 300) nach einem der Ansprüche 1 bis 6 umfasst, um eine bidirektionale Kommunikation mit der Steuereinheit (226) zu ermöglichen.

11. Verfahren zum Installieren einer Wärmeschrumpfabdeckung, wobei das Verfahren die folgenden Schritte umfasst:
Bereitstellen der Wärmeschrumpfabdeckung mit mindestens einem Heizelement (205), wobei das Heizelement (205) elektrisch mit einem ersten Verbindungselement (102, 202, 302) eines elektrischen Verbinders (100, 200, 300) nach einem der Ansprüche 1 bis 6 verbunden ist,
Verbinden einer Stromquelle (226) mit dem mindestens einen Heizelement (205) durch Verbinden des zugehörigen zweiten Verbindungselements (104, 204, 304) mit dem ersten Verbindungselement (102, 202, 302);
Auslesen der in der Informationsspeichereinheit (112, 212, 312) gespeicherten Daten über die Kommunikationsschnittstelle;
Zuführen elektrischer Energie zu dem mindestens einen Heizelement (205) zum Durchführen eines Heizvorgangs gemäß den in der Informationsspeichereinheit (112, 212, 312) gespeicherten Daten.

12. Verfahren nach Anspruch 11, wobei die Informationsspeichereinheit (112, 212, 312) eine elektronische Speichereinheit (122, 222, 322) umfasst, wobei das Verfahren ferner den Schritt des Speicherns von durch die Steuereinheit (226) eingegebenen Informationen in der elektronischen Speichereinheit (122, 222, 322), nachdem der Heizvorgang abgeschlossen worden ist, umfasst.

13. Verfahren nach Anspruch 11 oder 12, wobei die Steuereinheit (226) mit weiteren elektrischen Verbindern (100, 200, 300) kommuniziert, deren erste Verbindungselemente (102, 202, 302) mit weiteren elektrischen Komponenten verbunden sind.

## Revendications

1. Connecteur électrique pour un système de chauffage (201), le connecteur électrique (100, 200, 300) comprenant :
un premier élément de connecteur (102, 202, 302) comprenant un boîtier (118, 218, 318) et au moins une première borne de puissance (106, 206, 306) pour fournir de l'énergie électrique à un élément chauffant (205) du système de chauffage (201) ;
un deuxième élément de connecteur (104, 204, 304) pouvant être accouplé au premier élément de connecteur (102, 202, 302), le deuxième élément de connecteur (104, 204, 304) comprenant une deuxième borne de puissance complémentaire (108, 208, 308) pouvant être accouplée à l'au moins une première borne de puissance (106, 206, 306) ;
une unité de stockage d'informations (112, 212, 312) pour stocker des données utilisables pour faire fonctionner le système de chauffage (201) ; et
une interface de communication pour lire les données stockées dans l'unité de stockage d'informations (112, 212, 312),
dans lequel l'interface de communication comprend au moins une borne de communication (113, 313) ayant des premiers éléments de contact (114, 314) destinés à être connectés à des seconds éléments de contact (116, 316) d'un connecteur électriquement conducteur complémentaire (117, 317) ; et
l'unité de stockage d'informations (112, 212, 312) est une unité de stockage électronique qui comprend au moins une mémoire morte programmable, PROM, une mémoire morte programmable effaçable, EPROM, et/ou une mémoire morte programmable effaçable électriquement, EEPROM.

2. Connecteur électrique selon l'une des revendications précédentes, dans lequel l'interface de communication comprend une interface de communication sans fil.

3. Connecteur électrique selon l'une des revendications précédentes, dans lequel l'interface de communication est adaptée à une communication bidirectionnelle de l'unité de stockage d'informations (112, 212, 312) avec l'unité de commande (226).

4. Connecteur électrique selon l'une des revendications précédentes, dans lequel l'unité de stockage d'informations (112, 212, 312) comprend une étiquette RFID agencée au niveau du boîtier (118, 218, 318) du premier élément de connecteur (102, 202, 302), et dans lequel l'interface de communication comprend un lecteur RFID agencé au niveau du deuxième élément de connecteur (104, 204, 304).

5. Connecteur électrique selon l'une des revendications précédentes, dans lequel l'unité de stockage d'informations (112, 212, 312) comprend une carte de circuit imprimé (120, 220, 320) montée à l'intérieur du boîtier (118, 218, 318), avec une unité de stockage électronique (122, 222, 322) montée sur la carte de circuit imprimé (120, 220, 320).

6. Connecteur électrique selon l'une des revendications précédentes, dans lequel le premier élément de connecteur (102, 202, 302) est en outre adapté à recevoir un signal de mesure de température provenant d'un capteur de température externe.

7. Système de chauffage pour un composant thermorétractable, le système de chauffage (201) comprenant :
au moins une unité de chauffage (203) avec au moins un élément chauffant (205);
au moins un connecteur électrique (100, 200, 300) selon l'une des revendications précédentes, dans lequel l'au moins un élément chauffant (205) est connecté à l'au moins une première borne de puissance (106, 206, 306).

8. Système de chauffage selon la revendication 7, comprenant en outre une unité de commande (226) pour commander l'alimentation électrique de l'au moins un élément chauffant (205), dans lequel l'unité de commande (226) est apte à communiquer avec l'unité de stockage d'informations (112, 212, 312) via l'interface de communication (113, 313).

9. Système de chauffage selon la revendication 7 ou 8, comprenant en outre un générateur électrique (234) et/ou un bloc-batterie (236) formant ladite source d'alimentation.

10. Système de chauffage selon la revendication 9, dans lequel au moins l'un parmi le générateur électrique (234) et/ou le bloc-batterie (236) comprend en outre un connecteur électrique (100, 200, 300) selon l'une des revendications 1 à 6 pour permettre une communication bidirectionnelle avec l'unité de commande (226).

11. Procédé d'installation d'une enveloppe thermorétractable, le procédé comprenant les étapes suivantes :
fournir l'enveloppe thermorétractable avec au moins un élément chauffant (205), dans lequel l'élément chauffant (205) est connecté électriquement à un premier élément de connecteur (102, 202, 302) d'un connecteur électrique (100, 200, 300) selon l'une des revendications 1 à 6,
connecter une source d'alimentation (226) à l'au moins un élément chauffant (205) en connectant le deuxième élément de connecteur complémentaire (104, 204, 304) au premier élément de connecteur (102, 202, 302) ;
via l'interface de communication, lire les données stockées dans l'unité de stockage d'informations (112, 212, 312) ;
fournir de l'énergie électrique à l'au moins un élément chauffant (205) pour effectuer un processus de chauffage conformément aux données stockées dans l'unité de stockage d'informations (112, 212, 312).

12. Procédé selon la revendication 11, dans lequel l'unité de stockage d'informations (112, 212, 312) comprend une unité de stockage électronique (122, 222, 322), le procédé comprenant en outre l'étape de stockage d'informations entrées par l'unité de commande (226) dans l'unité de stockage électronique (122, 222, 322) après que le processus de chauffage a été achevé.

13. Procédé selon la revendication 11 ou 12, dans lequel l'unité de commande (226) communique avec d'autres connecteurs électriques (100, 200, 300), dont les premiers éléments de connecteur (102, 202, 302) sont connectés à d'autres composants électriques.
